# EUROPÄISCHE PATENTSCHRIFT

(11) **EP 3 765 831 B1**
(45) Veröffentlichungstag und Bekanntmachung des Hinweises auf die Patenterteilung: **10.08.2022**
(21) Anmeldenummer: 19704617.0
(22) Anmeldetag: 12.02.2019
(51) Int. Cl.: G01M 5/00, B61K 9/10

(54) **SYSTEM ZUM ERFASSEN EINER MECHANISCHEN ZUG-/DRUCKSPANNUNG EINER SCHIENE**
SYSTEM FOR CAPTURING A MECHANICAL TENSILE/COMPRESSIVE STRESS OF A RAIL
SYSTÈME PERMETTANT DE DÉTECTER UNE CONTRAINTE MÉCANIQUE DE TRACTION/COMPRESSION D'UN RAIL

(30) Priorität: 12.03.2018 AT 672018
(43) Veröffentlichungstag der Anmeldung: 20.01.2021
(73) Patentinhaber: Plasser & Theurer Export von Bahnbaumaschinen GmbH, 1010 Wien (AT)
(72) Erfinder: BÜRGER, Martin, 4030 Linz (AT); ZAUNER, Gerald, 4073 Wilhering (AT)
(86) Internationale Anmeldenummer: PCT/EP2019/053371
(87) Internationale Veröffentlichungsnummer: WO 2019/174834

(56) Entgegenhaltungen:
- DE-A1- 10 008 200
- US-A1- 2015 285 688

## Beschreibung

### Gebiet der Technik

Die Erfindung betrifft ein System zum Erfassen einer mechanischen Zug-/Druckspannung einer Schiene eines Gleises, insbesondere zur Bestimmung der Neutraltemperatur, umfassend ein Schienenfahrzeug, einen daran angeordneten Schienentemperaturdetektor und eine Auswerteeinrichtung. Außerdem betrifft die Erfindung ein Verfahren zur Detektion einer Zug-/Druckspannung einer Schiene eines Gleises mittels des Systems.

### Stand der Technik

Temperaturschwankungen, Anfahren und Bremsen von Schienenfahrzeugen und Durchbiegungen durch Last führen insbesondere an Schienenbefestigungsmitteln wegen der Koppelung von Oberbau und Tragwerk zu Zwängungen und somit zu zusätzlichen Längsspannungen in einer Schiene.

Heutzutage sind Eisenbahngleise so ausgelegt, dass die thermischen Kräfte, die zu einer Ausdehnung der Schienen beispielsweise bei Wärme führen würden, vom Oberbau, also den Schwellen und dem Gleisbett, aufgenommen werden.

Besonders beim Einsatz von Schienenschweißgeräten ist eine präzise Ermittlung von Zug-/Druckspannungen einer Schiene bzw. in Folge eine Bestimmung der Neutraltemperatur nötig, um einen spannungsarmen Zustand des geschweißten Gleises sicherzustellen.

Um eine genau Analyse und einen Ist-Zustand eines Gleises zu detektieren sind aus dem Stand der Technik bereits mehrere Verfahren zur Ermittlung einer Neutraltemperatur bzw. einer Zug-/Druckspannung einer Schiene bekannt.

Eine bekannte Methode zur Messung der Neutraltemperatur ist die Ultraschallmessung. Diese basiert auf einem Phänomen, dass die Schallgeschwindigkeit in einer Schiene vom Spannungszustand beeinflusst wird. Die Schallgeschwindigkeit in der Schiene wird mit der Schallgeschwindigkeit in einer Schiene ohne thermische Spannungen verglichen. Aus einer Differenz zwischen diesen können die Zug-/Druckspannungen abgeleitet werden. Dies ist eine schnelle Methode, jedoch macht die Notwendigkeit einer Referenzmessung die Ergebnisse ungenau. Die Ultraschallmethode ist eine indirekte Methode, die eine Datenbank verwendet, welche die Beziehungen zwischen Schallgeschwindigkeit und Schienenmaterial umfasst. Eine solche Methode ist beispielsweise aus der WO 2013/070455 A1 und der WO 2014/124050 A1 bekannt.

Eine ebenfalls bekannte Methode, die magnetische Messung, ist in der WO 96/35947 A1 offenbart. Bei diesem Verfahren werden berührungslose Magnetsonden verwendet, um ein magnetisches Wechselfeld in der Schiene zu erzeugen. Dieses Wechselfeld interagiert mit den Eigenschaften einer Schienenmikrostruktur und erzeugt ein magnetisches Barkhausenrauschen (Magnetischer Barkhausen-Effekt). Das Barkhausenrauschen kann über ein Oszilloskop sichtbar gemacht werden. Eine Amplitude des Barkhausenrauschens hängt mit der Längsspannung in der Schiene zusammen. Wie bei den Ultraschallmethoden müssen jedoch die Messungen von der belasteten Schiene mit Messungen von Referenzmaterial verglichen werden.

Aus der US 2013/0070083 A1 ist ein System bekannt, welches über eine Kamera, einen Temperaturdetektor und eine Computersteuerung verfügt. Die von der Kamera aufgenommenen Bilder von Schienenverbindungen bzw. Schienenankern und die gesammelten Daten des Temperaturdetektors werden genutzt um über eine Computersteuerung eine axiale Spannung der Schiene aufgrund der Bilder und Schienentemperatur abzuschätzen.

Die WO 2005/093157 A1 offenbart ein System, bei dem eine Schiene erwärmt wird, wobei mittels eines Infrarotdetektors eine Temperaturdifferenz erfasst wird, um daraus auf Fehler bzw. Risse in der Schiene zu schließen. In der DE 100 08 200 A1 ist eine Anlage zum Prüfen der Biegefestigkeit eines Mastes mittels eines Laserstrahls und einer Messkamera beschrieben.

### Zusammenfassung der Erfindung

Der Erfindung liegen die Aufgaben zugrunde, für ein System und ein Verfahren der eingangs genannten Art Verbesserungen gegenüber dem Stand der Technik anzugeben.

Erfindungsgemäß werden diese Aufgaben gelöst durch die Merkmale der Ansprüche 1 und 11. Vorteilhafte Weiterbildungen der Erfindung ergeben sich aus den abhängigen Ansprüchen.

Die Erfindung sieht vor, dass das System eine Wärmequelle zur gezielten Erwärmung eines Messbereichs der Schiene umfasst, dass der Schienentemperaturdetektor zur Temperaturerfassung während einer Erwärmungs- und/oder Abkühlphase des Messbereichs ausgebildet ist und dass die Auswerteeinrichtung zur Bestimmung einer thermischen Wärmeleitfähigkeit des Schienenmaterials aus erfassten Temperaturdaten und daraus zur Ableitung der Zug-Druckspannung eingerichtet ist. Eine zeitliche Entwicklung der von dem Schienentemperaturdetektor gemessenen Temperaturdaten bietet eine präzise Möglichkeit, eine thermische Wärmeleitfähigkeit eines Schienenmaterials zu bestimmen, um daraus in Folge die herrschende mechanische Zug-/Druckspannung in der Schiene mittels der Auswerteeinrichtung abzuleiten.

Vorteilhafterweise ist die Wärmequelle beabstandet und insbesondere mit einer kontinuierlichen Geschwindigkeit entlang der Schiene geführt. Durch ein kontaktloses Erwärmen der Schiene wird ein Erfassen einer mechanischen Zug-/Druckspannung einer Schiene während einer Vorfahrt des Schienenfahrzeuges ermöglicht.

Bei einer weiteren Verbesserung ist der Schienentemperatordetektor mittels einer Führungseinrichtung am Schienenfahrzeug angeordnet. Um während eines Arbeitseinsatzes des Schienenfahrzeuges immer einen konstanten Abstand zwischen Schienentemperaturdetektor und Schiene einzuhalten, ist der Schienentemperaturdetektor verschiebbar in einer Gleisquerrichtung gegenüber einem Maschinenrahmen auf der Führungseinrichtung gelagert. Dadurch kann beispielsweise in einer Kurve und/oder einer Gleisüberhöhung ein exakter gleichbleibender relativer Abstand gewährleistet werden. Auch eine Verschiebung in einer Gleislängsrichtung ist vorteilhaft für einen kontinuierlichen Messeinsatz.

In einer vorteilhaften Ausprägung der Erfindung ist der Schienentemperaturdetektor als punktförmig messender Infrarotdetektor ausgebildet. Bei einem relativen Stillstand zwischen Schienentemperaturdetektor und Schiene (z.B. mittels einer Führungseinrichtung) während eines Messvorgangs bietet sich besonders der Einsatz eines punktförmig messenden Infrarotdetektors an. Ein solcher Detektor ist kostengünstig und robust im Aufbau.

Bei einer weiteren günstigen Ausgestaltung der Erfindung ist der Schienentemperaturdetektor als Infrarotkamera ausgebildet. Der Einsatz einer Infrarotkamera erlaubt zusätzlich eine gleichzeitige Auswertung an unterschiedlichen örtlichen Messpositionen auf der Schiene durch einen größeren Erfassungsbereich.

Zudem ist es günstig, wenn die Wärmequelle als Laser ausgebildet ist. Ein großer Vorteil besteht hier in der Präzision des Lasers. Somit kann ein Messbereich auf der Schiene gezielt erwärmt werden, wobei beispielsweise eine punktförmige Einwirkung des Lasers erfolgt. Eine flächige Erwärmung ermöglicht der Einsatz eines Linien- oder Flächenlasers.

Bei einer weiteren günstigen Ausgestaltung der Erfindung ist die Wärmequelle als Induktionsspule ausgebildet. Durch die Induktionsspule wird eine konstruktiv einfache, jedoch zuverlässige Lösung für eine Wärmequelle geboten.

Zudem ist es von Vorteil, wenn die Wärmequelle und der Schienentemperaturdetektor mittels einer gemeinsamen Steuerungseinrichtung angesteuert sind. Um einen koordinierten Arbeitseinsatz zu gewährleisten, werden der Schienentemperaturdetektor, die Wärmequelle und gegebenenfalls die Führungseinrichtung sowie sämtliche zugehörigen Antriebe über die gemeinsame Steuerungseinrichtung angesteuert.

Günstiger Weise sind die Wärmequelle und der Schienentemperaturdetektor in dieselbe Richtung ausgerichtet, um Temperaturen einer angestrahlten Schienenoberfläche zu erfassen. Dadurch können Wärmequelle und Schienentemperaturdetektor einfach und platzsparend unterhalb eines Schienenfahrzeugs angeordnet werden. Ein weiterer Vorteil ist durch eine einfache Nachrüstbarkeit an bereits bestehende Schienenfahrzeuge gegeben.

In einer weiteren Variante sind die Wärmequelle und der Schienentemperaturdetektor in entgegengesetzten Richtungen ausgerichtet, um Temperaturen an einer Rückseite eines an einer Vorderseite angestrahlten Schienenstegs zu erfassen. Durch eine getrennte, beidseitige Anordnung der Wärmequelle und des Schienentemperaturdetektors wird eine noch präzisere Messung erreicht. Eine gegenseitige Beeinflussung von Wärmequelle und Schienentemperaturdetektor wird somit ausgeschlossen.

Beim erfindungsgemäßen Verfahren ist vorgesehen, dass ein Messbereich einer Schiene mittels der Wärmequelle erwärmt wird und dadurch eine thermische Anregung des Messbereiches erfolgt, dass ein im Messbereich auf der Schiene auftretendes Erwärmungs- und/oder Abkühlverhalten mittels des Schienentemperaturdetektors erfasst und mittels der Auswertungseinrichtung in der Weise ausgewertet wird, dass eine thermische Wärmeleitfähigkeit des Schienenmaterials bestimmt und daraus die Zug-Druckspannung der Schiene abgeleitet wird. Ein derartiges Messverfahren zur Ermittlung mechanischen Zug-/Druckspannungen in einer Schiene ist präzise und benötigt keine Referenzmessungen an spannungslosen Schienen.

Eine weiterführende Variante des Verfahrens sieht vor, dass während einer Maschinenvorfahrt ein zeitlicher Temperaturverlauf eines auf eine Fahrgeschwindigkeit abgestimmten Messbereichs erfasst wird. Dadurch wird eine Zug-/Druckspannungsmessung während einer Maschinenvorfahrt erreicht.

Für eine genauere Analyse der Gleisbeschaffenheit wird der Messbereich mit einem modulierten Energieverlauf thermisch angeregt. Beispielsweise kann eine Laserstrahlung sinusförmig moduliert werden. Eine Auswertung im Frequenzbereich erlaubt dann insbesondere auch eine Bestimmung von Phasenwerten. Verglichen wird ein Messsignal des

Schienentemperaturdetektors gegenüber einer Anregung durch die

Wärmequelle. Dies wirkt sich vorteilhaft auf die Robustheit des Verfahrens bzw. auf die Unabhängigkeit des Messsignals von äußeren Einflüssen wie Schienen-Oberflächenbeschaffenheit oder Laserleistung aus.

Dabei ist es günstig, wenn eine Phasenverschiebung zwischen dem modulierten Energieverlauf und einem erfassten Temperaturverlauf ermittelt wird. Die Ermittlung der Phasenverschiebung ermöglicht einen genauen Vergleich der Messdaten und eine besonders präzise Auswertung.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Seitenansicht eines Schienenfahrzeugs
- Fig. 2: Querschnitt eines Schienenfahrzeugs
- Fig. 3: Erfassungsbereich des Schienentemperaturdetektors
- Fig. 4: Anordnung eines Schienentemperaturdetektors und einer Wärmequelle

### Beschreibung der Ausführungsformen

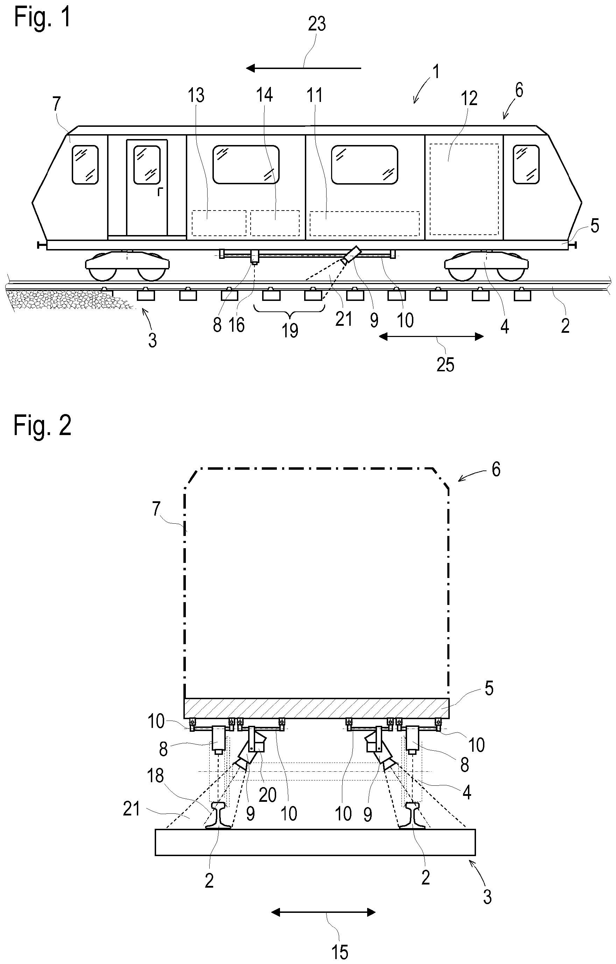

Fig. 1 zeigt ein System 1 zum Erfassen einer mechanischen Zug-/Druckspannung einer Schiene 2 eines Gleises 3, umfassend ein auf dem Gleis 3 verfahrbares Schienenfahrzeug 6 in Seitenansicht. Das Schienenfahrzeug 6 weist einen über Schienenfahrwerke 4 abgestützten Maschinenrahmen 5 auf. Auf dem Maschinenrahmen 5 ist eine Fahrzeugkabine 7 angeordnet. Unterhalb des Maschinenrahmens 5 und zwischen den Schienenfahrwerken 4 sind pro Schiene 2 eine Wärmequelle 8 und ein Schienentemperaturdetektor 9 positioniert. Jeder Wärmequelle 8 und gegebenenfalls auch jedem Schienentemperaturdetektor 9 ist eine Führungseinrichtung 10 zugeordnet. Zudem verfügt das Schienenfahrzeug 6 über einen eigenen Fahrantrieb 11 und eine Energieversorgung 12. Über eine Steuerungseinrichtung 13 werden die Wärmequellen 8, die Schienentemperaturdetektoren 9, die Verschiebeeinrichtungen 10 und etwaige Antriebe zentral gesteuert. Um die von den Schienentemperaturdetektoren 9 erfassten Daten auszuwerten umfasst das System 1 eine Auswerteeinrichtung 14.

In Fig. 2 ist das Schienenfahrzeug 6 im Schnitt in einer Gleisquerrichtung 15 dargestellt. Unterhalb des Maschinenrahmens 5 sind für die jeweilige Schiene 2 eine Wärmequelle 8 und ein Schienentemperaturdetektor 9 positioniert. Günstiger Weise ist jede Wärmequelle 8 und jeder Schienentemperaturdetektor 9 auf einer eigenen Führungseinrichtung 10 verschiebbar gelagert. Zur Erweiterung der Einstellmöglichkeiten ist dem jeweiligen Schienentemperaturdetektor 9 zusätzlich ein Schwenkantrieb 20 zugeordnet.

Im gezeigten Beispiel ist die jeweilige Wärmequelle 9 als Laser ausgebildet. Ein vom Laser abgesonderter Laserstrahl 16 ist mittig auf eine Schienenkopfoberfläche 17 ausgerichtet. Auch eine Blickachse 18 des zugehörigen Schienentemperaturdetektors 9 ist auf die Schienenkopfoberfläche 17 ausgerichtet. In einer Kurve und/oder Gleisüberhöhung erfolgt eine seitliche Nachführung der Laser und gegebenenfalls der Schienentemperaturdetektoren 9 durch eine entsprechende Ansteuerung der Führungseinrichtungen 10 mittels der gemeinsamen Steuerungseinrichtung 13. Auf diese Weise wird ein vorab definierter Messbereich 19 der jeweiligen Schiene 2 erwärmt und erfasst.

In einer einfachen Ausführung ist der Schienentemperaturdetektor 9 als punktförmig messender Infrarotdetektor ausgebildet. Für eine genaue Erfassung eines Temperaturverlaufs im Messbereich 19 wird der Infrarotdetektor für die Dauer eines Messvorgangs gegenüber der zugeordneten Schiene 2 in Position gehalten. Somit wird die zeitliche Entwicklung eines erfassten Temperatursignals an einem örtlichen Punkt ausgewertet, wobei Frequenzanalysemethoden zur Anwendung kommen können.

In einer anderen Ausführungsvariante ist der Schienentemperaturdetektor 9 als Infrarotkamera (Flächendetektor) ausgebildet. Gegenüber einem punktförmig messenden Infrarotdetektor bietet eine Infrarotkamera den Vorteil eines ausgedehnten Erfassungsbereichs 21. Eine Führungseinrichtung 10 ist nicht notwendig, wenn der Messbereich 19 auch in Kurvenfahrten und bei Gleisüberhöhungen nicht aus dem Erfassungsbereich 21 der Infrarotkamera wandert. Der Messbereich 19 ist dabei jener Bereich der Schiene 2, in dem eine mittels Wärmequelle 8 hervorgerufene Temperaturveränderung detektiert wird. Der Einsatz einer Infrarotkamera ermöglicht die gleichzeitige Auswertung an unterschiedlichen örtlichen Positionen, etwa entlang einer örtlichen Messlinie 22 oder über die Schienenoberfläche verteilt.

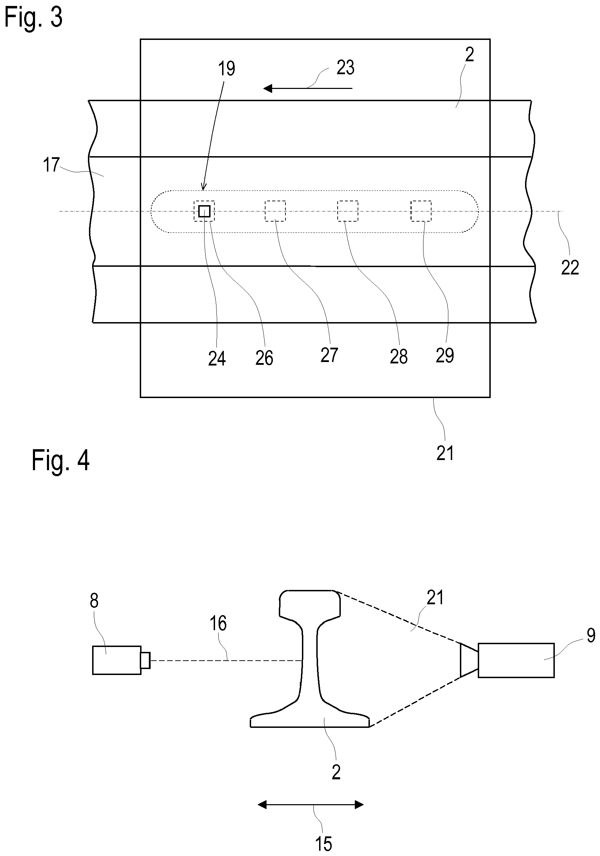

Fig. 3 zeigt den Erfassungsbereich 21 einer Infrarotkamera, die sich mit dem Schienenfahrzeug 6 in Fahrtrichtung 23 über der Schiene 2 vorwärtsbewegt (Kamerasensor-Bild). Die als Laser ausgebildete Wärmequelle 8 wird zentriert über der Schienenkopfoberfläche 17 geführt und erwärmt den Messbereich 19. Die Erwärmung (thermische Anregung) kann punktförmig, linienförmig oder flächenhaft ausgebildet sein. Im zeitlichen Verlauf ist eine pulsförmig oder sinusartig thermische Anregung sinnvoll.

Im Messbereich 19 wird zumindest an einer Messstelle 24 ein Temperaturverlauf detektiert. Dabei bewegt sich die Messstelle 24 während eines Messvorgangs entlang einer horizontal verschobenen örtlichen Messlinie 22 im Kamerasensor-Bild entgegen der Fahrtrichtung 23. Die Erfassung des zeitlichen Temperaturverlaufs an der Messstelle 24 erfolgt durch die korrekte, auf die Fahrgeschwindigkeit abgestimmte Zuordnung der entsprechenden Signalwerte entlang der Messlinie 22. Beispielsweise wird an einer ersten Messposition 26 ein erster Messwert für die Messstelle 24 erfasst. Mit einem auf die Fahrgeschwindigkeit abgestimmten Abstand zur ersten Messposition 26 wird an einer zweiten Messposition 27 ein zweiter Messwert für die Messstelle 24 erfasst. Zusätzliche Messwerterfassungen erfolgen an weiteren Messpositionen 28, 29, bis die Messstelle 24 aus dem Erfassungsbereich 21 wandert.

Auf diese Weise erfolgt bei einem Messvorgang eine Erfassung zeitlicher Temperaturverläufe (Erwärmungen bzw. ein zeitliches Abkühlverhalten) durch den als Infrarotkamera ausgebildeten Schienentemperaturdetektor 9. Dabei reicht wenige Messwerte aus, um aussagekräftige Temperaturverläufe zu erfassen. Das erfindungsgemäße System 1 ermöglicht somit auch Messungen bei hohen Fahrgeschwindigkeiten des Schienenfahrzeugs 8.

Die thermische Leitfähigkeit des Schienenmaterials ist von herrschenden Zug-/Druckkräfte in der Schienen 2 abhängig. Der gemessene Temperaturverlauf bzw. die zeitliche Entwicklung der gemessenen thermischen Amplitudenwerte an den Messstellen 24 ermöglicht die Bestimmung der thermischen Wärmeleitfähigkeit (bzw. daraus abgeleitete Größen wie thermische Diffusivität oder Effusivität). Auf Basis der bekannten Materialeigenschaften werden daraus in weiterer Folge die Zug-/Druckkräfte abgeleitet.

Eine Verbesserung des Verfahrens sieht vor, dass eine zeitlich modulierte Erwärmung des Messbereichs 19 bzw. der jeweiligen Messstelle 24 erfolgt. Beispielsweise wird der Laser mit einem Sinussignal angesteuert, sodass die abgegebene Strahlungsenergie einem Sinusverlauf folgt. Dabei erfolgt eine Auswertung des gemessenen Temperaturverlaufs an der jeweiligen Messstelle 24 im Frequenzbereich. Unterstützt wird diese Auswertung durch entsprechenden Frequenzanalysemethoden.

Für eine präzise Auswertung wird eine Phasenverschiebung zwischen dem modulierten Verlauf der eingebrachten Energie und dem erfassten Temperaturverlauf ermittelt. Um die Phasenverschiebung genau bestimmen zu können, wird der erfasste Temperaturverlauf mittels FourierTransformation in mehrere, kontinuierliche Spektren zerlegt. Damit kann eine Frequenz des Lasers einer Frequenz des Temperaturverlaufs gegenübergestellt werden.

Die physikalischen Zusammenhänge zwischen einem Temperaturverlauf und einer Zug-/Druckspannung sind in der Veröffentlichung Huiting Huan et al., "Non-destructive and non-contacting stress-strain characterization of aerospace metallic alloys using photo-thermo-mechanical radiometry, NDT&E International 84 (2016), 47-53, Elsevier Ltd. beschrieben.

Zusätzlich können auf Basis bekannter Materialeigenschaften über die zeitlich modulierte Erwärmung und eine Auswertung des Temperaturverlaufs im Frequenzbereich Legierungszusammensetzungen des Schienenmaterials erkannt werden.

In Fig. 4 ist eine weitere Variante für eine Anordnung der Wärmequelle 8 und des Temperaturdetektors 9 dargestellt. Dabei wirkt die Wärmequelle 8 auf eine Seite der Schiene 2, während der Schienentemperaturdetektor 9 auf eine in Gleisquerrichtung 15 gegenüberliegende Seite der Schiene 2 gerichtet ist. Durch diese räumliche Separierung dieser Systemkomponenten 8, 9 kann eine Beeinflussung der Komponenten untereinander ausgeschlossen werden. Dies bewirkt insbesondere eine Verbesserung der Signalqualität.

In Fig. 1 ist der jeweilige Schienentemperaturdetektor 9 zusätzlich in einer Schienenlängsrichtung 25 verschiebbar gelagert. Während einer Maschinenvorfahrt wird der Schienentemperaturdetektor 9 zyklisch vor und zurückbewegt. Die Rückwärtsbewegung ist dabei auf die Vorwärtsfahrt des Schienenfahrzeugs 6 abgestimmt, um den Schienentemperaturdetektor 9 während eines Messvorgang über einer Messstelle 24 zu halten. An einem Umkehrpunkt wird der Schienentemperaturdetektor 9 wieder in Fahrtrichtung 23 in seine Ausgangsposition verschoben und der Messzyklus beginnt von neuem. Dadurch ist eine längere Messdauer realisierbar. Zudem eignet sich diese Anordnung für den Einsatz eines punktförmig messenden Infrarotdetektors, wobei das Schienenfahrzeug 6 während eines Messvorgangs nicht angehalten werden muss.

## Patentansprüche

1. System (1) zum Erfassen einer mechanischen Zug-/Druckspannung einer Schiene (2) eines Gleises (3), insbesondere zur Bestimmung der Neutraltemperatur, umfassend ein Schienenfahrzeug (6), einen daran angeordneten Schienentemperaturdetektor (9) und eine Auswerteeinrichtung (14), **dadurch gekennzeichnet, dass** das System (1) eine Wärmequelle (8) zur gezielten Erwärmung eines Messbereichs (19) der Schiene (2) umfasst, dass der Schienentemperaturdetektor (9) zur Temperaturerfassung während einer Erwärmungs- und/oder Abkühlphase des Messbereichs (19) ausgebildet ist und dass die Auswerteeinrichtung (14) zur Bestimmung einer thermischen Wärmeleitfähigkeit des Schienenmaterials aus erfassten Temperaturdaten und daraus zur Ableitung der Zug-Druckspannung der Schiene (2) eingerichtet ist.

2. System (1) nach Anspruch 1, **dadurch gekennzeichnet, dass** die Wärmequelle (8) beabstandet und insbesondere mit einer kontinuierlichen Geschwindigkeit entlang der Schiene (2) geführt ist.

3. System (1) nach Anspruch 1 oder 2, **dadurch gekennzeichnet, dass** der Schienentemperatordetektor (9) mittels einer Führungseinrichtung (10) am Schienenfahrzeug (6) angeordnet ist.

4. System (1) nach einem der Ansprüche 1 bis 3, **dadurch gekennzeichnet, dass** der Schienentemperaturdetektor (9) als punktförmig messender Infrarotdetektor ausgebildet ist.

5. System (1) nach einem der Ansprüche 1 bis 3, **dadurch gekennzeichnet, dass** der Schienentemperaturdetektor (9) als Infrarotkamera ausgebildet ist.

6. System (1) nach einem der Ansprüche 1 bis 5, **dadurch gekennzeichnet, dass** die Wärmequelle (8) als Laser ausgebildet ist.

7. System (1) nach einem der Ansprüche 1 bis 5, **dadurch gekennzeichnet, dass** die Wärmequelle (8) als Induktionsspule ausgebildet ist.

8. System (1) nach einem der Ansprüche 1 bis 7, **dadurch gekennzeichnet, dass** die Wärmequelle (8) und der Schienentemperaturdetektor (9) mittels einer gemeinsamen Steuerungseinrichtung (13) angesteuert sind.

9. System (1) nach einem der Ansprüche 1 bis 8, **dadurch gekennzeichnet, dass** die Wärmequelle (8) und der Schienentemperaturdetektor (9) in dieselbe Richtung ausgerichtet sind, um Temperaturen einer angestrahlten Schienenoberfläche zu erfassen.

10. System (1) nach einem der Ansprüche 1 bis 8, **dadurch gekennzeichnet, dass** die Wärmequelle (8) und der Schienentemperaturdetektor (9) in entgegengesetzten Richtungen ausgerichtet sind, um Temperaturen an einer Rückseite eines an einer Vorderseite angestrahlten Schienenstegs zu erfassen.

11. Verfahren zur Detektion einer Zug-/Druckspannung einer Schiene (2) eines Gleises (3), insbesondere zur Bestimmung der Neutraltemperatur, mittels eines Systems (1) nach einem der Ansprüche 1 bis 10, **dadurch gekennzeichnet, dass** der Messbereich (19) der Schiene (2) mittels der Wärmequelle (8) erwärmt wird und dadurch eine thermische Anregung des Messbereiches (19) erfolgt, dass ein im Messbereich (19) auf der Schiene (2) auftretendes Erwärmungs- und/oder Abkühlverhalten mittels des Schienentemperaturdetektors (9) erfasst und in der Weise mittels der Auswerteeinrichtung (14) ausgewertet wird, dass die thermische Wärmeleitfähigkeit des Schienenmaterials bestimmt und daraus die Zug-Druckspannung der Schiene (2) abgeleitet wird.

12. Verfahren nach Anspruch 11, **dadurch gekennzeichnet, dass** während einer Maschinenvorfahrt ein zeitlicher Temperaturverlauf eines auf eine Fahrgeschwindigkeit abgestimmten Messbereichs (19) erfasst wird.

13. Verfahren nach Anspruch 11 oder 12, **dadurch gekennzeichnet, dass** der Messbereich (19) mit einem modulierten Energieverlauf thermisch angeregt wird.

14. Verfahren nach Anspruch 13, **dadurch gekennzeichnet, dass** eine Phasenverschiebung zwischen dem modulierten Energieverlauf und einem erfassten Temperaturverlauf ermittelt wird.

## Claims

1. A system (1) for recording a mechanical tensile/compressive stress of a rail (2) of a track (3), in particular for determining the neutral temperature, comprising a rail vehicle (6), a rail temperature detector (9) arranged thereon, and an evaluation device (14), **characterized in that** the system (1) comprises a heat source (8) for targeted heating of a measuring area (19) of the rail (2), that the rail temperature detector (9) is designed for temperature recording during a heating- and/or cooling phase of the measuring area (19), and that the evaluation device (14) is configured to determine a thermal conductivity of a rail material from recorded temperature data in order to subsequently for deducing the tensile/compressive stress in the rail (2).

2. A system (1) according to claim 1, **characterized in that** the heat source (8) is guided along the rail (2) at a distance and, in particular, with a continuous speed.

3. A system (1) according to claim 1 or 2, **characterized in that** the rail temperature detector (9) is arranged on the rail vehicle (6) by means of a guiding device (10).

4. A system (1) according to one of claims 1 to 3, **characterized in that** the rail temperature detector (9) is designed as a punctiform-measuring infrared detector.

5. A system (1) according to one of claims 1 to 3, **characterized in that** the rail temperature detector (9) is designed as an infrared camera.

6. A system (1) according to one of claims 1 to 5, **characterized in that** the heat source (8) is designed as a laser.

7. A system (1) according to one of claims 1 to 5, **characterized in that** the heat source (8) is designed as an induction coil.

8. A system (1) according to one of claims 1 to 7, **characterized in that** the heat source (8) and the rail temperature detector (9) are controlled by means of a common control device (13).

9. A system (1) according to one of claims 1 to 8, **characterized in that** the heat source (8) and the rail temperature detector (9) are oriented in the same direction in order to record temperatures of an irradiated rail surface.

10. A system (1) according to one of claims 1 to 8, **characterized in that** the heat source (8) and the rail temperature detector (9) are oriented in opposite directions in order to record temperatures at a rear side of a rail web irradiated at a front side.

11. A method for detection of a tensile/compressive stress of a rail (2) of a track (3), in particular for determining the neutral temperature, by means of a system (1) according to one of claims 1 to 10, **characterized in that** a measuring area (19) of the rail (2) is heated by means of the heat source (8) and thus a thermic stimulation of the measuring area (19) takes place, that a heating- and/or cooling behaviour in the measuring area (19) occurring on the rail (2) is recorded by means of the rail temperature detector (9) and evaluated by means of the evaluation device (14) **in that** way that the thermal conductivity of a rail material is determined and in order to subsequently the tensile/compressive stress in the rail (2) is deduced.

12. A method according to claim 11, **characterized in that**, during forward travel of the machine, a chronological temperature progression of a measuring area (19) coordinated with a travel speed is recorded.

13. A method according to claim 11 or 12, **characterized in that** the measuring area (19) is thermically stimulated with a modulated energy progression.

14. A method according to claim 13, **characterized in that** a phase shift between the modulated energy progression and a recorded temperature progression is determined.

## Revendications

1. Système (1) de détection d'une tension de traction/compression mécanique d'un rail (2) d'une voie ferrée (3), notamment de détermination de la température neutre, comprenant un véhicule ferroviaire (6), un détecteur de température de rail (9) disposé sur celui-ci et un dispositif d'évaluation (14), **caractérisé en ce que** le système (1) comprend une source de chaleur (8) pour le réchauffement ciblé d'une région de mesure (19) du rail (2), que le détecteur de température de rail (9) est réalisé pour la détection de température pendant une phase de réchauffement et/ou refroidissement de la région de mesure (19) et que le dispositif d'évaluation (14) est configuré pour la détermination d'une conductivité thermique du matériau de rail à partir de données de température détectées et à partir de celle-ci pour la dérivation de la tension de traction-compression du rail (2).

2. Système (1) selon la revendication 1, **caractérisé en ce que** la source de chaleur (8) est guidée de manière écartée et notamment avec une vitesse continue le long du rail (2).

3. Système (1) selon la revendication 1 ou 2, **caractérisé en ce que** le détecteur de température de rail (9) est disposé sur le véhicule ferroviaire (6) au moyen d'un dispositif de guidage (10).

4. Système (1) selon une des revendications 1 à 3, **caractérisé en ce que** le détecteur de température de rail (9) est réalisé en tant que détecteur infrarouge à mesure ponctuelle.

5. Système (1) selon une des revendications 1 à 3, **caractérisé en ce que** le détecteur de température de rail (9) est réalisé en tant que caméra infrarouge.

6. Système (1) selon une des revendications 1 à 5, **caractérisé en ce que** la source de chaleur (8) est réalisée en tant que laser.

7. Système (1) selon une des revendications 1 à 5, **caractérisé en ce que** la source de chaleur (8) est réalisée en tant que bobine d'induction.

8. Système (1) selon une des revendications 1 à 7, **caractérisé en ce que** la source de chaleur (8) et le détecteur de température de rail (9) sont commandés au moyen d'un dispositif de commande commun (13).

9. Système (1) selon une des revendications 1 à 8, **caractérisé en ce que** la source de chaleur (8) et le détecteur de température de rail (9) sont configurés dans la même direction pour détecter des températures d'une surface de rail illuminée.

10. Système (1) selon une des revendications 1 à 8, **caractérisé en ce que** la source de chaleur (8) et le détecteur de température de rail (9) sont configurés dans des directions opposées pour détecter des températures sur un côté arrière d'une âme de rail illuminée sur un côté avant.

11. Procédé de détection d'une tension de traction/compression d'un rail (2) d'une voie ferrée (3), notamment de détermination de la température neutre, au moyen d'un système (1) selon une des revendications 1 à 10, **caractérisé en ce que** la région de mesure (19) du rail (2) est réchauffée au moyen de la source de chaleur (8) et qu'une excitation thermique de la région de mesure (19) se produit de ce fait, qu'un comportement de réchauffement et/ou refroidissement survenant sur le rail (2) dans la région de mesure (19) est détecté au moyen du détecteur de température de rail (9) et évalué au moyen du dispositif d'évaluation (14) de telle sorte que la conductivité thermique du matériau de rail est déterminée et la tension de traction-compression du rail (2) est dérivée à partir de celle-ci.

12. Procédé selon la revendication 11, **caractérisé en ce qu'**un tracé de température temporel d'une région de mesure (19) adaptée à une vitesse de déplacement est détecté pendant une avancée de machine.

13. Procédé selon la revendication 11 ou 12, **caractérisé en ce que** la région de mesure (19) est excitée thermiquement avec un tracé d'énergie modulé.

14. Procédé selon la revendication 13, **caractérisé en ce qu'**un déphasage entre le tracé d'énergie modulé et un tracé de température détecté est déterminé.
